# EUROPÄISCHE PATENTSCHRIFT

(11) **EP 0 681 907 B1**
(45) Veröffentlichungstag und Bekanntmachung des Hinweises auf die Patenterteilung: **26.06.2002**
(21) Anmeldenummer: 95106483.1
(22) Anmeldetag: 28.04.1995
(51) Int. Cl.: B29C 71/00

(54) **Verfahren zur Verminderung der Emissionen flüchtiger Substanzen**
Method for reducing the emission of volatile substances
Procédé pour réduire l'émission de substances volatiles

(30) Priorität: 13.05.1994 DE 4416938
(43) Veröffentlichungstag der Anmeldung: 15.11.1995
(73) Patentinhaber: Dr.Ing.h.c. F. Porsche Aktiengesellschaft, 70435 Stuttgart (DE)
(72) Erfinder: Separautzki, Reinhold, D-71696 Möglingen (DE)

(56) Entgegenhaltungen:
- DE-A- 1 938 123
- DE-A- 2 017 904
- DE-A- 2 338 871
- DE-A- 3 111 223
- DE-A- 3 602 865
- DE-A- 4 212 444
- DE-A- 4 421 421
- PATENT ABSTRACTS OF JAPAN vol. 017, no. 368 (M-1443), 12.Juli 1993 & JP 05 057810 A (OMRON CORP), 9.März 1993,
- DATABASE WPI Section Ch, Week 8508 Derwent Publications Ltd., London, GB; Class A17, AN 85-046615 XP002032861 & JP 60 004 038 A (SANWA KAKO CO) , 10.Januar 1985
- PATENT ABSTRACTS OF JAPAN vol. 017, no. 368 (M-1443), 12.Juli 1993 & JP 05 057809 A (OMRON CORP), 9.März 1993,

## Beschreibung

Die Erfindung bezieht sich auf ein Verfahren zur Verminderung der Emissionen flüchtiger Substanzen im Innenraum von Fahrzeugen aus im Innenraum angeordneten Ausrüstungsgegenständen.

Im Innenraum von Fahrzeugen werden unterschiedlichste Materialien, wie Textilien, Leder, Schaumstoffe, Plastikformteile, Lacke, Kleber, Gummi, Abdichtstoffe und dergleichen verwendet, wobei Hilfsstoffe aus diesen aufgeführten Materialien ausdünsten.
Insbesondere bei neuen Fahrzeugen und starker Sonneneinstrahlung erhöhen sich die Ausdünstungen im Innenraum. Bei späterer Abkühlung sinkt die Aufnahmefähigkeit der Luft und die in ihr gelösten Verbindungen setzen sich als Kondensat im Wageninnern ab, und zwar zuerst an schnell abkühlenden Werkstoffen wie Glas oder Metall (Kühlfalleneffekt). Dies führt neben einer Scheibeneintrübung zu einem besonders intensiven Geruch des Fahrzeuginnenraumes, der besonders kurz nach der Auslieferung als sogenannter "Neuwagengeruch" bezeichnet wird. Die Kondensation von verdampften, flüchtigen Bestandteilen der Ausrüstungsgegenstände an der Innenseite der Verglasung, insbesondere an der Windschutzscheibe, wird im Fahrzeugbau als Fogging bezeichnet.

Aus dem Artikel "Einflüsse auf die Luftqualität im Fahrgastraum", ATZ, Automobiltechnische Zeitschrift 94 (1992) 10, Seiten 506 und 507, ist bekannt, daß die Emission von flüchtigen Substanzen durch Ausheizen der Materialien beim Hersteller verringert werden kann. Das Ausheizen erfolgt durch eine Wärmebehandlung der Ausrüstungsgegenstände.

Diesem Verfahren haftet der Nachteil an, daß zum Ausheizen ein hoher Energieaufwand erfoderlich ist, daß das Verfahren zeitaufwendig ist und daß die Atmosphäre durch die ausgasenden Stoffe belastet wird.

Ferner können bestimmte Materialien nur bis zu einer begrenzten Temperatur erwärmt werden, ohne daß eine Verformung oder Beschädigung eintritt. Dies führt dazu, daß ein gewisses Spektrum an Substanzen, das im Material enthalten ist, nicht erreicht wird und somit nicht ausdünsten kann.

Aus der JP-A-05 057810 ist es bekannt, Proben aus einem polymaren Werkstoff in einen Vakuumbehälter zu geben, wobei den Proben unter Vakuum einstellbare Wärme zugeführt wird. Die ausgasenden Stoffe aus den Proben werden in Abscheidern aufgefangen, damit sie sich nicht an der Oberfläche der Proben niederschlagen.

Aufgabe der Erfindung ist es, an Ausrüstungsgegenständen von Fahrzeugen solche Vorkehrungen zu treffen, daß die Emissionen deutlich verringert, die Geruchsbelästigung reduziert und eventuelle gesundheitliche Beeinträchtigungen der benutzenden Person ausgeschlossen werden.

Die erfindungsgemäße Lösung mit den kennzeichnenden Merkmalen des Hauptanspruchs hat gegenüber dem Bekannten den Vorteil, daß die Ausrüstigungsgegenstände bei ihrer Herstellung in einer Vakuumkammer einer Reihe von physikalischen Prozessen, wodurch sich eine schnellere Desorption ergibt, unterzogen werden. Damit weisen die Ausrüstungsgegenstände eine wesentlich verringerte Ausdünstung auf, so daß einerseits die Scheibeneintrübung und andererseits die Geruchsbelästigung stark reduziert werden.

Die Vakuumbehandlung in einer geschlossenen Vakuumkammer selbst kann durch Wärme-, Kälte- oder Strahlungsbehandlung erfolgen.

Durch die Vakuumbehandlung werden die Siedepunkte der in den Materialien enthaltenen Stoffe deutlich herabgesetzt und die Dampfdrücke erhöht, so daß mehr Substanzen gezielt zur Ausgasung gebracht werden. Dieser Prozeß wird durch Wärme- oder Kälteeinwirkung in der Vakuumkammer noch unterstützt. Ferner wird die Zeitdauer des Ausdünstens durch die Behandlung in der Vakuumkammer wesentlich herabgesetzt. Ein weiterer Vorteil ergibt sich dadurch, daß das Fahrzeug nahezu komplett mit allen zu behandelnden Ausrüstungsgegenständen in eine entsprechend große Vakuumkammer eingebracht wird. Damit werden alle entsprechenden Bauteile in einem einzigen Prozeß behandelt und nicht jedes Bauteil separat, was wiederum ein einfaches und schnelles Handling ermöglicht.

Weitere Vorteile sind durch die Merkmale der abhängigen Ansprüche gegeben. Die abgesaugten chemischen Verbindungen sind in Abscheidern auffangbar, neutralisierbar bzw. zu gettern, so daß keine Belastung der Atmosphäre erfolgt. Durch die Behandlung in der Vakuumkammer weisen die ausgelieferten Fahrzeuge stets eine gleichbleibende Auslieferungsqualität auf.

Ein Ausführungsbeispiel der Erfindung ist in der Zeichnung dargestellt und wird im folgenden näher erläutert.

Es zeigt
- Fig. 1: einen Längsschnitt durch eine Vakuumkammer mit darin angeordneten Fahrzeugen,
- Fig. 2: eine Ansicht in Pfeilrichtung R der Fig. 1.

Zur Verminderung der Emissionen von flüchtigen Substanzen aus Ausrüstungsgegenständen (1) von Fahrzeugen ist vorgesehen, die Ausrüstungsgegenstände vor der Kundenauslieferung bei ihrer Herstellung einer Vakuumbehandlung in einer geschlossenen Vakuumkammer zu unterziehen.

Als Ausrüstungsgegenstände (1) von Fahrzeugen, wie Kraftfahrzeugen, Nutzfahrzeugen, Zügen, Schiffen, Flugzeugen oder dgl. sind in erster Linie Innenausstattungsteile (3) der Fahrzeuginnenausstattung zu nennen, die sich aus den unterschiedlichsten Materialien wie -Textilien, Leder, Schaumstoffe, Plastikformteile, Lacke, Kleber, Gummi, Abdichtstoffe und dergleichen zusammensetzen können. In den genannten Materialien sind flüchtige Substanzen wie Weichmacher, Gleitmittel, Lösungsmittel, Katalysatoren und dergleichen enthalten, die je nach Temperatureinfluß mehr oder weniger stark ausgasen.

Bei einem Personenkraftwagen tritt die Ausdünstung, insbesondere bei Sitzen, Sitzbezügen, Fußmatten, Armaturentafelfolie, Formhimmel, Türverkleidungen, Kunstleder- oder Lederbezügen, PUR-Schäume, Teppichen, Verklebungen und dergleichen auf.

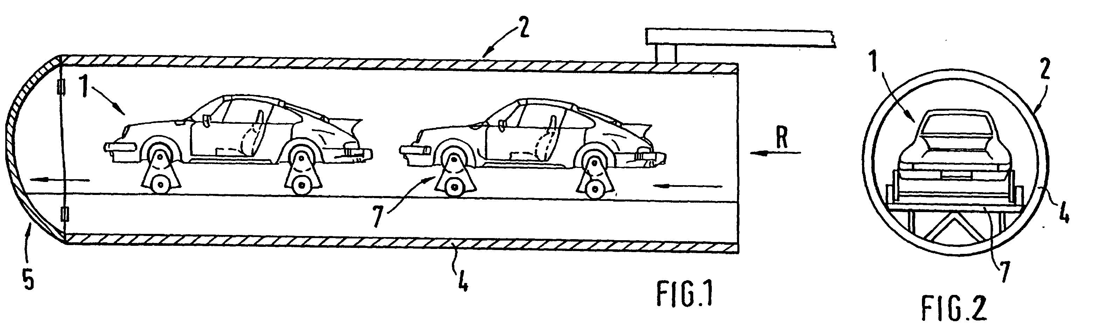

Die Vakuumkammer 2 wird durch einen langgestreckten, zylindrischen Hohlkörper 4 gebildet, der an seinen beiden Enden durch schwenkbare Türen 5, 6 verschließbar ist. Innerhalb des Hohlkörpers 4 ist eine horizontale Bodenplatte 7 angeordnet, auf der Fördereinrichtungen bewegbar sind. Die Fördereinrichtungen nehmen gemäß Fig. 1 nahezu komplette Fahrzeuge wie Personenkraftwagen auf, wobei entsprechend Fig. 1 die Räder nicht montiert und die Flüssigkeitsbehälter des Fahrzeuges leer sind. Weitere Bauteile, die durch eine Vakuumbehandlung geschädigt werden könnten, sind gleichfalls zu berücksichtigen.

In der Vakuuumkammer 2 ist ein Druckniveau von 1013 mbar bis 10⁻⁵ mbar einstellbar. Zur Beschleunigung und Steuerung der Desorption werden in der Vakuumkammer 2 zusätzliche physikalische Prozesse durchgeführt. Dies kann beispielsweise eine Wärme-, Kälte- oder Strahlungsbehandlung sein.

Zur Schonung der Atmosphäre sind die in der Vakuumkammer 2 abgepumpten gasförmigen Verbindungen an Abscheidern auffangbar, neutralisierbar oder zu gettern. Eventuell ist ihre Rückgewinnung in Betracht zu ziehen.

Der Entgasungsprozeß in der Vakuumkammer 2 ist so steuerbar, daß notwendige Zusatzstoffe in der erforderlichen Größenordnung erhalten bleiben, um eine vorzeitge Alterung von Materialien oder Baugruppen bzw. eine verminderte Klebewirkung zu vermeiden.

Die erforderlichen Temperaturen und der Druck innerhalb der Vakuumkammer 2 wird für unterschiedliche Ausrüstungsgegenstände 1 nach den zu beseitigenden Substanzen festgelegt.

Insbesondere bei Schäumen wird durch das Vakuumverfahren eine Ausgasung und "Durchlüftung" der kompletten Struktur angestrebt.

Die Vakuumbehandlung garantiert stets eine gleichbleibende Auslieferungsqualität der Ausrüstungsgegenstände in Bezug auf die Ausdünstung flüchtiger Substanzen.

Die Prozesse sind automatisch steuerbar.

## Patentansprüche

1. Verfahren zur Verminderung der Emissionen flüchtiger Substanzen im Innenraum angeordneten Ausrüstungsgegenständen von Fahrzeugen, **dadurch gekennzeichnet, daß** die Ausrüstungs- oder Einrichtungsgegenstände (1) vor der Kundenauslieferung in einer geschlossenen Vakuumkammer (2) einer Vakuumbehandlung unterzogen werden, indem eine Reihe von physikalischen Prozessen zur Beschleunigung und Steuerung der Desorption durchgeführt werden, wobei die Fahrzeuge mit allen zu behandelnden Ausrüstungsgegenständen nahezu komplett der Vakuumbehandlung unterzogen werden.

2. Verfahren nach Anspruch 1, **dadurch gekennzeichnet, daß** die physikalischen Prozesse durch eine Wärme-, Kälte- oder Strahlungsbehandlung gebildet werden.

3. Verfahren nach den Ansprüchen 1 oder 2, **dadurch gekennzeichnet, daß** die in der Vakuumkammer (2) abgepumpten, gasförmigen Verbindungen an Abscheidern auffangbar, neutralisierbar oder zu gettern sind.

4. Verfahren nach Anspruch 1, **dadurch gekennzeichnet, daß** die Ausrüstungsgegenstände (1) für Fahrzeuge hauptsächlich durch Innenausstattungsteile (3) einer Fahrzeuginnenausstattung gebildet werden.

5. Verfahren nach Anspruch 1, **dadurch gekennzeichnet, daß** bei der Vakuumbehandlung an den nahezu kompletten Fahrzeugen all die Bauteile nicht montiert sind, die durch die Vakuumbehandlung geschädigt werden konnten.

6. Verfahren nach einem der vorherigen Ansprüche, **dadurch gekennzeichnet, daß** in der Vakuumkammer Drücke von 1013 mbar bis 1 x 10⁻⁵ mbar einstellbar sind.

7. Verfahren nach einem der vorhergehenden Ansprüche, **dadurch gekennzeichnet, daß** bei der Belüftung der Vakuumkammer (2) auch gasförmige Substanzen beigemengt werden.

## Claims

1. A method of reducing the emission of volatile substances [from] items of equipment arranged in the interior of vehicles, **characterized in that** the items of equipment or fittings (1) are subjected to a vacuum treatment in a closed vacuum chamber (2) before delivery to the customer, a series of physical processes being carried out in order to accelerate and control the desorption, wherein the vehicles are subjected to the vacuum treatment virtually complete with all the items of equipment to be treated.

2. A method according to Claim 1, **characterized in that** the physical processes are formed by a heat, freezing or radiation treatment.

3. A method according to Claim 1 or 2, **characterized in that** the gaseous compounds pumped away in the vacuum chamber (2) can be intercepted on separators, can be neutralized or are to be gettered.

4. A method according to Claim 1, **characterized in that** the items of equipment (1) for vehicles are formed mainly by interior equipment parts (3) of the interior equipment of a vehicle.

5. A method according to Claim 1, **characterized in that** during the vacuum treatment all the components which could be damaged by the vacuum treatment are not mounted on the virtually complete vehicles.

6. A method according to one of the preceding Claims, **characterized in that** pressures of from 1013 mbar to 1 × 10⁻⁵ mbar can be set in the vacuum chamber.

7. A method according to one of the preceding Claims, **characterized in that** during the aeration of the vacuum chamber (2) gaseous substances are also admixed.

## Revendications

1. Procédé destiné à réduire les émissions de substances volatiles dans l'habitacle de véhicules, provenant d'objets d'équipement disposés dans l'habitacle, **caractérisé en ce que** les objets d'équipement ou d'aménagement (1) sont soumis, avant la livraison au client, à un traitement sous vide dans une chambre à vide (2) fermée, **en ce qu'**une série de processus physiques est exécutée pour accélérer et commander la désorption, les véhicules avec tous les objets d'équipement à traiter étant soumis presque complètement au traitement sous vide.

2. Procédé selon la revendication 1, **caractérisé en ce que** les processus physiques sont constitués par un traitement à la chaleur, au froid ou à un rayonnement.

3. Procédé selon les revendications 1 ou 2, **caractérisé en ce que** les composés gazeux, pompés dans la chambre à vide (2), peuvent être captés, neutralisés ou séparés sur des séparateurs.

4. Procédé selon la revendication 1, **caractérisé en ce que** les objets d'équipement (1) pour véhicules sont principalement constitués par des éléments d'équipement intérieur (3) d'un équipement intérieur du véhicule.

5. Procédé selon la revendication 1, **caractérisé en ce que** les composants qui pourraient être endommagés par le traitement sous vide ne sont pas tous montés pour le traitement sous vide des véhicules presque complets.

6. Procédé selon l'une des revendications précédentes, **caractérisé en ce que** dans la chambre à vide on peut régler des pressions de 1 013 mbars à 1 x 10⁻⁵ mbars.

7. Procédé selon l'une des revendications précédentes, **caractérisé en ce que** pendant la ventilation de la chambre à vide (2) on ajoute aussi des substances gazeuses.
